(19) Europäisches Patentamt / European Patent Office / Office européen des brevets

(11) **EP 2 561 681 B1**

(12) **FASCICULE DE BREVET EUROPEEN**

(45) Date de publication et mention de la délivrance du brevet:
**02.09.2015 Bulletin 2015/36**

(21) Numéro de dépôt: **11731424.5**

(22) Date de dépôt: **18.04.2011**

(51) Int Cl.:
*H04N 9/04* *(2006.01)*     *H04N 17/02* *(2006.01)*

(86) Numéro de dépôt international:
**PCT/FR2011/050887**

(87) Numéro de publication internationale:
**WO 2011/131898 (27.10.2011 Gazette 2011/43)**

(54) **TRAITEMENT NUMÉRIQUE DE COMPENSATION DE SIGNAUX ISSUS DE PHOTOSITES D'UN CAPTEUR COULEUR.**

DIGITALE VERARBEITUNG FÜR DIE KOMPENSATION VON AUS PHOTOSITES EINES FARBSENSORS EMITTIERTEN SIGNALEN

DIGITAL PROCESSING FOR COMPENSATING SIGNALS EMITTED BY PHOTOSITES OF A COLOUR SENSOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.04.2010 FR 1052997**

(43) Date de publication de la demande:
**27.02.2013 Bulletin 2013/09**

(73) Titulaire: **Centre National de la Recherche Scientifique (CNRS)**
**75016 Paris (FR)**

(72) Inventeur: **ALLEYSSON, David**
**F-38430 Moirans (FR)**

(74) Mandataire: **Cabinet Plasseraud**
**52, rue de la Victoire**
**75440 Paris Cedex 09 (FR)**

(56) Documents cités:
**US-A1- 2006 231 913     US-A1- 2007 279 501**
**US-B1- 7 009 639**

• **Ünal Sakoglu: "Signal-processing strategies for specral tuning and chromatic nonuniformity correction for quantum-dot IR sensors", The University of New Mexico, juin 2006 (2006-06), XP007916727, Albuquerque, New Mexico**

**Description**

La présente invention concerne l'acquisition d'images couleurs à partir d'un capteur comportant une pluralité de photosites, le capteur comportant en particulier une pluralité de sensibilités spectrales propres à chaque photosite.

L'augmentation de la résolution d'un capteur (c'est-à-dire du nombre de pixels utiles par unité de surface) est un problème majeur. On atteint aujourd'hui des résolutions de 10 Méga-pixels pour une surface de quelques millimètres carrés pour les appareils photographiques dans le domaine du visible. Bien entendu, ce problème peut gagner d'autres domaines de longueur d'onde (infrarouge, ultraviolets).

Avec l'augmentation de résolution, la surface de la partie sensible du capteur (les photosites) est réduite drastiquement. La quantité de lumière qui parvient à l'un des photosites du capteur est proportionnelle au carré de sa surface. Elle est donc réduite d'une exponentielle de base 2 par rapport à la réduction de surface du photosite. Dans le domaine du visible, on arrive aujourd'hui à des capteurs dont les caractéristiques de rapport signal sur bruit ne permettent plus d'obtenir des images satisfaisantes dans les conditions de lumière normales. On recherche donc actuellement, dans le domaine de la photographie numérique, à augmenter la quantité de lumière qui arrive au capteur.

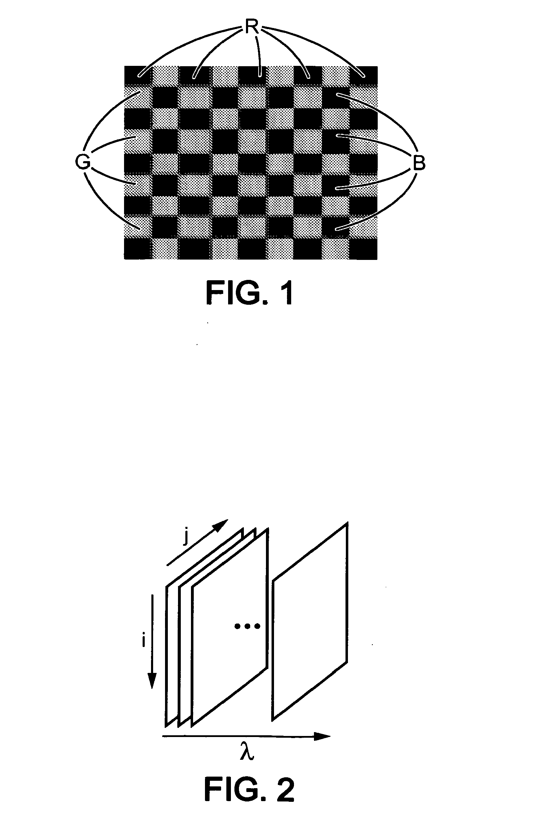

Dans le cas des capteurs pour images couleurs dans le domaine du visible, la "coloration" des pixels est due à l'ajout d'une matrice de trois filtres de couleurs (Rouge, Vert, Bleu) ou quatre filtres de couleurs (Rouge, Vert, Bleu, Emeraude), à la surface du capteur. De cette manière, on affecte à chacun des pixels une composante couleur particulière. La plus populaire des matrices de filtres couleurs est celle dite « de Bayer », comme illustré sur la figure 1, sur laquelle :

- la référence R désigne la couleur rouge,
- la référence G désigne la couleur verte, et
- la référence B désigne la couleur bleue.

Une telle matrice permet de "coloriser" chaque pixel ou photosite du capteur d'image selon l'une des couleurs R, G ou B choisie par le motif de la matrice de filtres couleurs. Ensuite, une image couleur (ayant les trois composantes couleurs à chaque pixel comme représenté sur la figure 1) est reconstruite à partir d'une image formée d'une mosaïque de couleurs rouge, vert et bleu.

L'inconvénient majeur de cette approche pour l'acquisition d'images couleurs est que les filtres couleurs absorbent une partie de la lumière, ce qui réduit ainsi la quantité de lumière qui parvient au photosite. En outre, la construction de ces filtres nécessite plusieurs opérations supplémentaires dans la chaîne de fabrication.

La présente invention, qui est définie dans les revendications, vient améliorer la situation.

A cet effet, elle propose tout d'abord un procédé d'acquisition d'images couleurs par un capteur comprenant une pluralité de photosites comportant des sensibilités spectrales susceptibles d'être différentes entre photosites. Au sens de l'invention, le procédé met en oeuvre des moyens de traitement numérique de signaux issus des photosites, un tel traitement numérique comportant en particulier l'application à ces signaux d'une fonction de transfert spatio-chromatique tenant compte d'une diversité de sensibilités spectrales des photosites, le capteur étant alors dépourvu d'une matrice physique de filtres de couleurs.

Ainsi, l'invention propose le remplacement d'un filtrage physique utilisant des filtres de couleurs par un traitement numérique des signaux issus du capteur.

Au préalable, les caractéristiques de transmission spectrale des photosites doivent être connues et la présente invention vise alors en outre un procédé d'étalonnage spectral d'un capteur d'images couleurs, le capteur comprenant une pluralité de photosites comportant des sensibilités spectrales susceptibles d'être différentes entre photosites.

Un tel procédé comporte alors les étapes :

- obtention de données de sensibilité spectrale de chaque photosite,
- construction d'une fonction de transfert spatio-chromatique tenant compte d'une diversité desdites sensibilités spectrales des photosites, et à appliquer à des signaux issus des photosites pour compenser cette diversité de sensibilités.

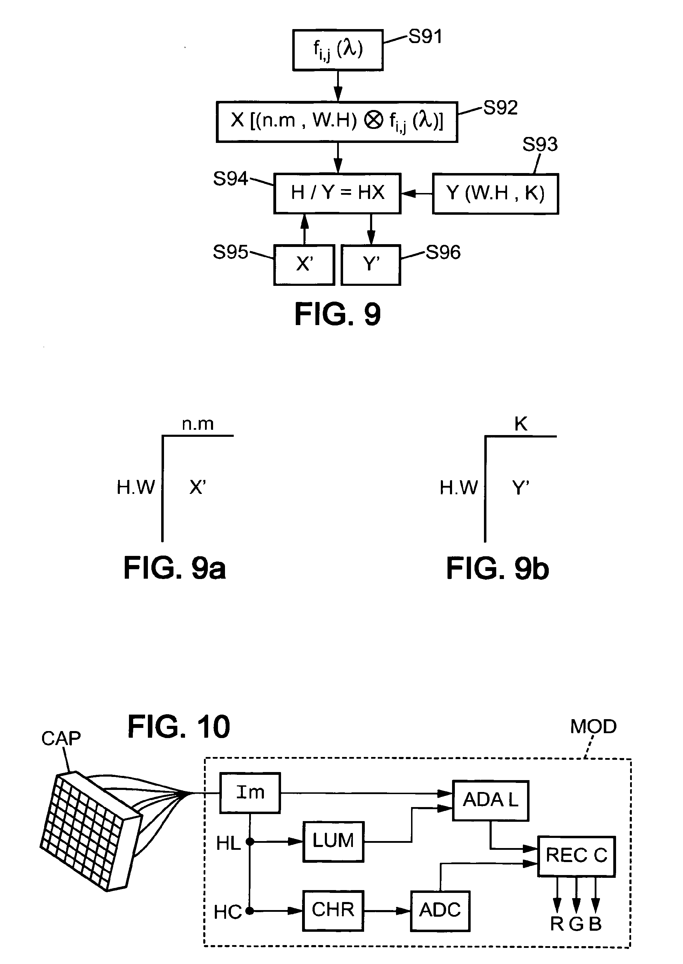

La présente invention vise aussi un programme informatique, comportant alors des instructions pour la mise en oeuvre du procédé d'acquisition d'images couleurs ci-avant, lorsqu'il est exécuté par un processeur. Un exemple de réalisation d'un algorithme d'un tel programme peut être représenté par la fin de l'organigramme représenté sur la figure 9 décrite ci-après à titre d'exemple de réalisation.

La présente invention vise aussi un module de traitement d'images numériques issues d'un capteur d'images en couleurs comportant une pluralité de photosites, et comportant des moyens pour la mise en oeuvre du procédé d'acquisition d'images ci-avant. La présente invention vise aussi un système comportant un tel module et un capteur relié à ce module. En particulier, le capteur est avantageusement dépourvu d'une matrice physique de filtres de couleurs. On a représenté très schématiquement un tel système intégrant le module sur la figure 10 décrite ci-après.

La présente invention vise aussi un programme informatique, comportant des instructions pour la mise en oeuvre du procédé d'étalonnage spectral d'un capteur tel que défini ci-avant, lorsqu'il est exécuté par un processeur. Un exemple de réalisation d'un algorithme d'un tel programme peut être représenté par le début de l'organigramme représenté sur la figure 9 décrite ci-après à titre d'exemple de réalisation.

D'autres avantages et caractéristiques de l'invention apparaîtront à la lecture de la description de modes de réalisation présentés ci-après à titre d'exemples, et à l'examen des dessins sur lesquels :

- la figure 1 représente une matrice de filtres de couleurs de Bayer,
- la figure 2 illustre ce qui est entendu par « image hyperspectrale »,
- la figure 3 illustre à titre d'exemple une partie d'un capteur dont les photosites sont de sensibilités spectrales différentes et aléatoires,
- la figure 4 illustre schématiquement un exemple de dispositif pour la mise en oeuvre de l'étape préliminaire de calibration du capteur,
- la figure 5 illustre la transformation d'une image hyperspectrale **I** en une image couleur (à 3 couleurs RGB dans l'exemple représenté),
- la figure 6 illustre la construction d'un vecteur **X** contenant le voisinage de l'image hyperspectrale échantillonnée par le capteur,
- la figure 7 illustre le calcul des filtres de reconstruction **H**$_i$ constituant la matrice de passage précitée,
- la figure 8 montre la qualité de reconstruction en fonction de la taille du voisinage n.m précité,
- la figure 9 résume les étapes principales du procédé au sens de l'invention,
- la figure 9a illustre la forme d'une matrice **X'** d'image acquise avant la transformation de reconstruction au sens de l'invention, pour obtenir la matrice transformée **Y'** de la figure 9b représentant l'image acquise mais exprimée dans un système à K couleurs (par exemple le système RGB avec K=3),
- la figure 9b représente la forme de la matrice ainsi transformée **Y'**,
- la figure 10 illustre très schématiquement un système incluant un module pour la mise en oeuvre du procédé d'acquisition d'images défini ci-avant.

La présente invention propose d'utiliser la dispersion naturelle qui existe entre les photosites d'un capteur pour permettre à ce dernier une distinction entre les différentes longueurs d'ondes. Cette dispersion est, bien entendu, aléatoire et non prédictible a priori. On comprendra donc que chaque capteur présente sa propre dispersion naturelle assujettie notamment à des aléas de fabrication par exemple.

Néanmoins, d'une manière formelle, le capteur peut-être considéré comme composé d'une multitude de filtres couleurs, ayant des sensibilités spectrales aléatoires et réparties aléatoirement. Une démarche de l'invention consiste alors en la reconstruction d'une image couleur à partir de l'image réelle mesurée par le capteur, et ce, en définissant au préalable un modèle d'image acquise par le capteur, comme décrit ci-après.

D'une manière formelle, un capteur d'image dépourvu de matrice de filtres couleurs peut-être considéré comme une matrice de photosites dont la réponse à la longueur d'onde est aléatoire et dont la disposition spatiale est également aléatoire. Pour déterminer les informations spectrales à la sortie d'un tel capteur, il est proposé au sens de l'invention d'utiliser des images hyperspectrales pour lesquelles une intensité lumineuse $I(i, j, \lambda)$ de chaque pixel est préalablement connue (par exemple mesurée) dans chaque longueur d'onde.

On a représenté sur la figure 2 ce qu'on entend ci-après par « image hyperspectrale ». Il s'agit d'une représentation matricielle tridimensionnelle dans laquelle chaque pixel de rang j et de colonne i est caractérisé par un jeu d'intensités en plusieurs longueurs d'onde $\lambda$.

A partir de telles images hyperspectrales $I(i, j, \lambda)$, il est possible de simuler une image $X(i, j)$ obtenue avec une sensibilité spectrale choisie $R(\lambda)$, en modulant le gain de chacune des images composites de l'image hyperspectrale correspondante. En pratique, les images hyperspectrales sont définies pour des domaines finis de longueur d'onde. En particulier, on dispose souvent des informations d'image hyperspectrale dans 31 longueurs d'onde du domaine visible, typiquement entre 400 et 700 nm avec un pas de 10 nm. L'équation de l'image s'écrit alors :

$$X(i, j) = \sum_{\lambda=1}^{31} R(\lambda) I(i, j, \lambda) \qquad (1)$$

En pratique aussi, on ne choisit pas des fonctions purement aléatoire pour la sensibilité spectrale $R(\lambda)$. Par exemple, le silicium à une sensibilité spectrale propre. Toutefois, la sensibilité spectrale dépend fortement du procédé de fabrication des photosites. Il existe des techniques pour réduire cette dispersion (par exemple par dopage régulier entre photosites).

Pour simplifier la génération de la simulation des photosites et contrôler le degré de dispersion de ceux-ci, il est utilisé, dans un exemple de réalisation, des fonctions de sensibilités spectrales des photosites, de type gaussiennes,

comme suit :

$$R(\lambda) = k \exp\left[-\left(\frac{\lambda - \mu}{\sigma}\right)^2\right] \qquad\qquad (2)$$

Les paramètres $k$, $\mu$ et $\sigma$ sont choisis aléatoirement pour chacun des photosites. On simule ainsi un capteur dont les fonctions de sensibilités chromatiques sont aléatoires. Pour restreindre les fonctions de sensibilités, il est choisi des intervalles de variations pour ces paramètres comme suit :

$$k \in \left[k_{\min}; k_{\max}\right]$$

$$\mu \in \left[\mu_{\min}; \mu_{\max}\right]$$

$$\sigma \in \left[\sigma_{\min}; \sigma_{\max}\right]$$

Ainsi, pour résumer en termes plus génériques ces caractéristiques, on définit une fonction de calibration spectrale $f_{i,j}(\lambda)$ pour chaque photosite i j pour moduler l'intensité en fonction de la longueur d'onde de chaque pixel d'une image de référence (par exemple d'une base de donnée) pour construire cette image de référence telle qu'elle est « vue » par le capteur. Cette modulation revient à calculer, pour chaque élément de matrice $X_{i,j}$ de la matrice image X, une expression du type :

$$X_{i,j} = \sum_{\lambda=1}^{U} R(\lambda) I_{i,j}(\lambda),$$

où :

- $I_{i,j}(\lambda)$ est une mesure d'intensité d'un signal issu du photosite de rangée i et de colonne j, à la longueur d'onde $\lambda$,
- $R(\lambda)$ est une fonction de sensibilité spectrale qui peut par exemple s'exprimer par une gaussienne du type :

$$R(\lambda) = k \exp\left[-\left(\frac{\lambda - \mu}{\sigma}\right)^2\right],$$

- et $U$ est un nombre de longueurs d'onde choisies dans le visible (entre 400 et 700 nm) avec un pas prédéterminé (par exemple un pas p = 10 nm, ce qui implique un nombre total $U$ de l'ordre d'une trentaine de longueurs d'onde (31 plus précisément)).

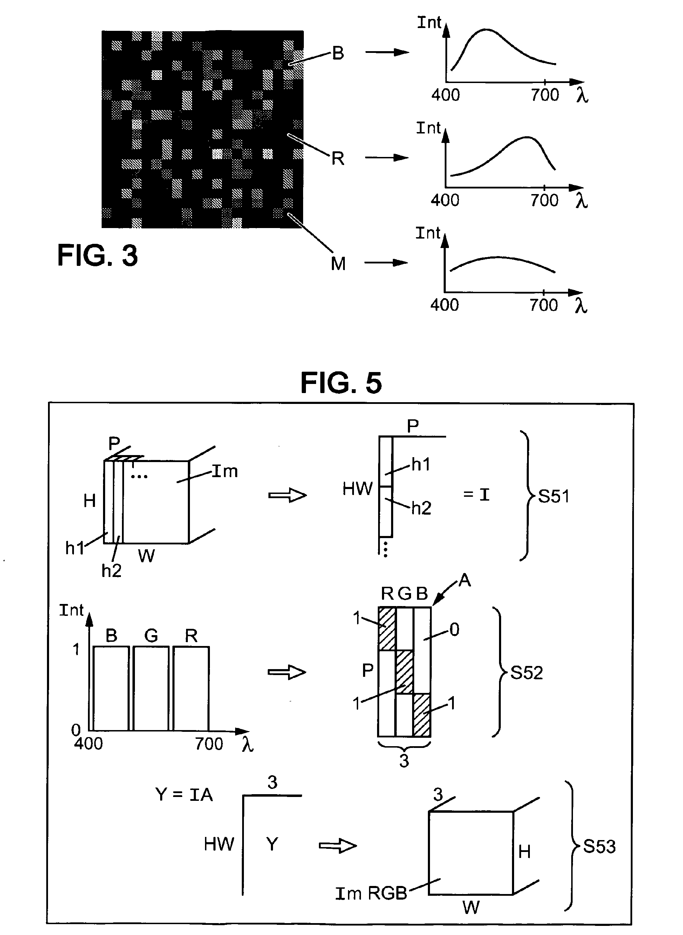

Le capteur comporte donc une fonction de sensibilité en longueur d'onde particulière pour chaque pixel. On a illustré alors à titre d'exemple, sur la figure 3, les différentes sensibilités spectrales des photosites du capteur. Par exemple, le photosite référencé R est plus « rouge » que la moyenne des photosites, tandis que le photosite B est plus « bleu », c'est-à-dire que la réception d'une lumière blanche par le photosite R génère un signal dont l'intensité est plus élevée dans les longueurs d'onde dans le rouge (600-700 nm) que pour le photosite B, et ce, en comparaison de l'intensité d'un photosite moyen M, d'intensité spectrale plus « plate » sur l'ensemble du spectre visible 400-700 nm comme illustré sur les schémas de droite de la figure 3.

Après cette première étape, il est alors possible de modéliser l'acquisition d'une image couleur par ce capteur en utilisant une image hyperspectrale suivant l'équation (1) ci-dessus. Différentes configurations du capteur peuvent être utilisées à cet effet avec des valeurs de :

- $k$ comprises entre 0,5 et 1,
- $\mu$ entre 450 et 650 nm et

- σ entre 50 et 200.

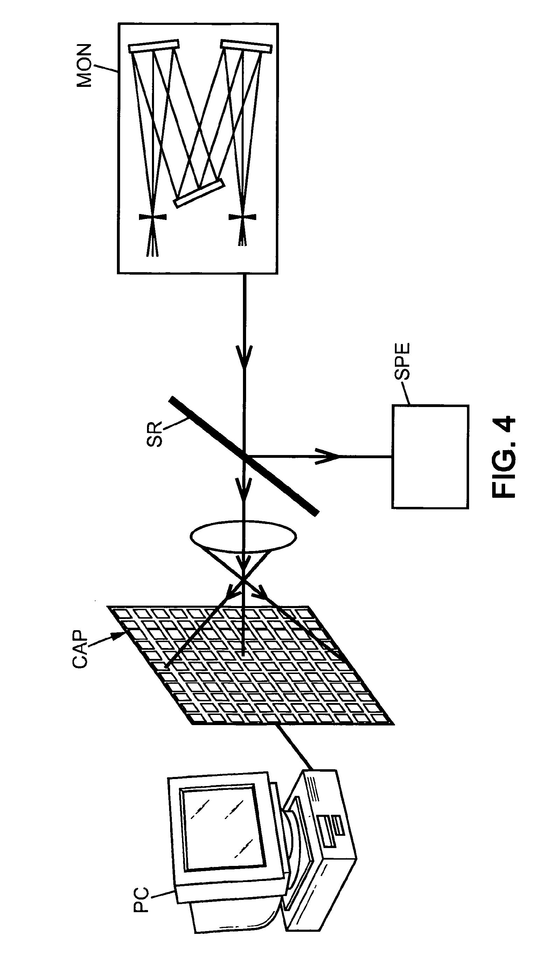

Toutefois, on ne connaît pas a priori les fonctions de sensibilité du capteur. Il convient donc de calibrer chacun des pixels pour déterminer sa fonction correspondante. A cet effet, on prévoit une étape d'étalonnage consistant à utiliser par exemple un monochromateur MON, comme représenté sur la figure 4, à partir duquel des images de référence sont acquises avec le capteur CAP pour chacune des longueurs d'onde entre 400 et 700 nm avec un pas de 10 nm. Le dispositif de la figure 4 comporte plus particulièrement :

- un monochromateur MON, apte à délivrer de la lumière dans une longueur d'onde choisie, quasi-unique,
- une lame semi-réfléchissante SR, apte à diriger une partie de cette lumière vers un spectrophotomètre SPE pour mesurer l'intensité de la lumière incidente dans le spectrophotomètre SPE et en déduire finalement l'intensité $I_0(\lambda)$ de la lumière focalisée sur le capteur CAP,
- le capteur CAP dont chaque photosite est censé délivrer un signal $I(\lambda)$ variant comme l'intensité de la lumière qu'il reçoit, pour chacune longueur d'onde que peut fournir le monochromateur, et
- un ordinateur PC pour établir un rapport, pour chaque longueur d'onde $\lambda$, entre l'intensité de signal $I(\lambda)$ que délivre un photosite et l'intensité réelle $I_0(\lambda)$ de lumière qu'il a reçue.

Un tel dispositif permet alors de mesurer la réponse de chaque pixel du capteur pour un jeu de longueurs d'onde monochromatiques. On dispose ainsi d'une image de sensibilité de tous les pixels du capteur pour chaque longueur d'onde du jeu précité.

L'image ayant été acquise par le capteur à sensibilités spectrales aléatoires, il convient ensuite de reconstruire l'image couleur. A cet effet, la reconstruction par exemple de trois couleurs RGB du pixel $(i, j)$ (RGB pour Red, Green, Blue, ou possiblement aussi de quatre couleurs Cyan, Magenta, Jaune, Noir) s'effectue préférentiellement à l'aide des pixels voisins dans un voisinage rectangulaire de taille $v_h \times v_w$ dans l'image acquise par le capteur. En effet, chacun des pixels voisins du pixel $(i, j)$ contient des informations spatiales et spectrales plus riches que le simple pixel $(i, j)$.

Pour chaque pixel $(i, j)$, on peut alors considérer un noyau **H** de reconstruction de taille $3 \times v_h v_w$ (ou $4 \times v_h v_w$ pour quatre couleurs) qui permet la reconstruction des « valeurs » (par exemple des intensités) de couleur RGB de la manière suivante :

$$\mathbf{Y} = \mathbf{XH} \qquad (3),$$

- **X** étant un vecteur colonne de taille $v_h v_w \times 1$ contenant le voisinage de taille $v_h \times v_w$ du pixel $(i, j)$ dans l'image acquise par le capteur,

- **Y** étant un vecteur de taille 3x 1 contenant les valeurs R, G et B du pixel $(i, j)$ et **H** une matrice de taille $3 \times v_h v_w$ contenant les filtres de reconstruction de l'image couleur à partir du voisinage.

Dans le principe, pour estimer initialement le noyau **H** (appelé ci-après « filtre de reconstruction »), on utilise une base de données d'images de référence pour laquelle les vecteurs **X** et **Y** sont connus, et le noyau **H** est donné par la formule suivante (où $\mathbf{X^t}$ désigne la transposée de la matrice X) :

$$\mathbf{H} = \mathbf{X^t}.\mathbf{Y}.(\mathbf{X^t}.\mathbf{X})^{-1} \qquad (4)$$

Préférentiellement, on utilise en pratique une base de données d'images hyperspectrales, par exemple de $n = 8$ images, pour laquelle on calcule les filtres de reconstruction.

Le principe étant posé ci-avant, en pratique, la première étape consiste à construire l'image RGB à partir de l'image hyperspectrale en utilisant la relation suivante :

$$\mathbf{Y} = \mathbf{IA} \qquad (5)$$

Cette image mise sous la forme d'un vecteur **Y** est construite comme illustré sur la figure 5, sur laquelle :

- la référence H désigne la hauteur de l'image Im,

- la référence W désigne sa largeur

- et la référence P désigne le nombre de pas en longueur d'onde (par exemple depuis 400 nm jusqu'à 700 nm).

Ainsi, la matrice tridimensionnelle Im comporte, pour chaque pixel de ligne suivant H et de colonne suivant W, l'intensité lumineuse (ou l'énergie ou autre) de ce pixel à une longueur d'onde suivant P.

Lors d'une première étape S51, une image de référence par exemple extraite d'une base de données se présente initialement alors sous la forme de cette matrice tridimensionnelle Im. Les données d'intensités en fonction de la longueur d'onde, que comporte la matrice Im, sont alors connues pour l'image de référence précitée. Ensuite, un traitement de transformation de cette matrice tridimensionnelle en matrice bidimensionnelle est mené en alignant bout à bout chaque colonne h1, h2 de la matrice Im en une seule colonne, pour chaque longueur d'onde suivant P. On obtient alors une matrice bidimensionnelle I comportant P colonnes (par exemple 31 colonnes avec un pas de 10 nm entre 400 et 700 nm) et HW lignes (soit donc finalement le nombre total de pixels dans l'image). Une étape suivante consiste à construire une matrice A, à 3 colonnes pour « Rouge » R, « Vert » G et « Bleu » B, dans laquelle les parties hachurées sont des coefficients de matrice non nuls (valant « 1 » par exemple), et les autres coefficients sont par exemple nuls. La matrice A permet donc de passer d'une représentation à P composantes spectrales (par exemple 31) à une représentation à 3 composantes de couleurs RGB (ou encore, dans une variante, à 4 couleurs : cyan, magenta, jaune, noir par exemple).

Une fois cette matrice A construite à l'étape S52, on forme la matrice $\mathbf{Y}$ telle que $\mathbf{Y=IA}$ à l'étape S53, par simple multiplication matricielle. On observera alors qu'il est possible de déduire de la matrice $\mathbf{Y}$ une matrice tridimensionnelle ImRGB représentant les couleurs RGB (axe « 3 ») propres à chaque pixel de l'image. On utilise alors cette matrice $\mathbf{Y}$ comme référence pour calculer les filtres de reconstruction comme décrit ci-après.

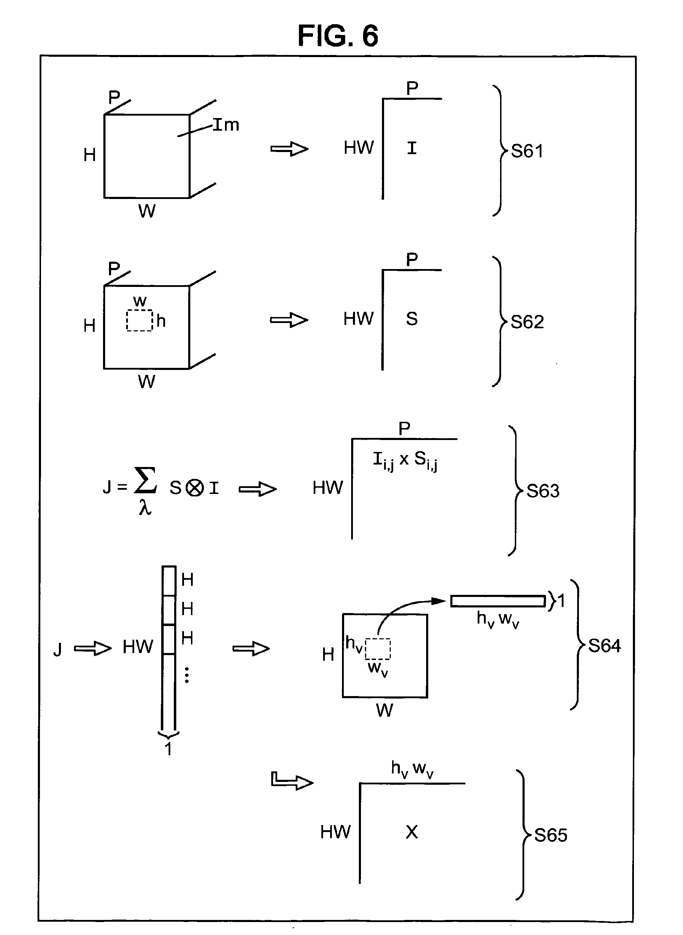

On se réfère maintenant à la figure 6 pour décrire la suite du procédé.

L'étape S61 est identique à l'étape S51 de la figure 5 pour l'obtention de la matrice $\mathbf{I}$. On construit ensuite à l'étape S62 la fonction matricielle de transfert du capteur à partir de valeurs de $k$, $\mu$ et $\sigma$ choisies aléatoirement pour chaque pixel. Pour simplifier les calculs et pour réduire la taille des données nécessaires qui peuvent être extraites de la base de données (par exemple utiliser seulement 8 images de référence), on utilise en fait un motif seulement de l'image, de taille plus petite que l'image, de taille $h \times w$ comme représenté sur la figure 6. On réplique ensuite ce « morceau du capteur » pour qu'il soit de la même taille que l'image H.W. D'ailleurs, la figure 3 représente un exemple de modèle d'acquisition d'une image blanche par ce « morceau du capteur ». Bien entendu, il s'agit là d'un exemple de réalisation particulier, et il peut être choisi en variante de prendre l'ensemble des photosites du capteur H.W pour construire la matrice $\mathbf{J}$ et non pas un simple « morceau » du capteur. Ici, le choix d'un simple « morceau » de capteur est motivé par la réduction des informations nécessaires pour estimer la reconstruction, et en particulier ici, par la réduction des informations d'images de référence nécessaires. C'est ainsi qu'il a été observé que seules 8 images d'une base de données devraient suffire pour la mise en oeuvre du procédé au sens de l'invention. Préférentiellement aussi, les images choisies sont dans ce cas suffisamment contrastées spectralement et chromatiquement pour offrir plus de richesse d'informations.

On calcule à l'étape suivante S63 l'image $\mathbf{J}$ qui serait échantillonnée par le capteur en utilisant la matrice $\mathbf{S}$ représentative du capteur et la matrice $\mathbf{I}$ représentative de l'image hyperspectrale de la manière suivante :

$$\mathbf{J} = \sum_{\lambda} \mathbf{S} \otimes \mathbf{I} \qquad (6)$$

où le signe $\otimes$ désigne un produit de coefficient Sij de la matrice S à coefficient Ii,j de la matrice $\mathbf{I}$, ces produits pour i,j étant sommés ensuite sur P (sur l'ensemble par exemple des 31 longueurs d'onde). La matrice $\mathbf{J}$ obtenue à l'étape S64 est alors uni-colonne à HW coefficients. On en déduit à nouveau une matrice $\mathbf{J}$ ayant les dimensions de l'image H.W. A l'étape S65, on peut alors construire une nouvelle matrice $\mathbf{X}$ en extrayant et en concaténant les pixels de chaque voisinage de taille $h_v \times w_v$ de l'image $\mathbf{J}$. Ce voisinage sert d'entrée pour calculer les filtres $\mathbf{H}$. Un tel traitement revient à considérer un voisinage autour de chaque élément de matrice $\mathbf{J}$ (donc de chaque pixel), telle que représentée à la fin de l'étape S64.

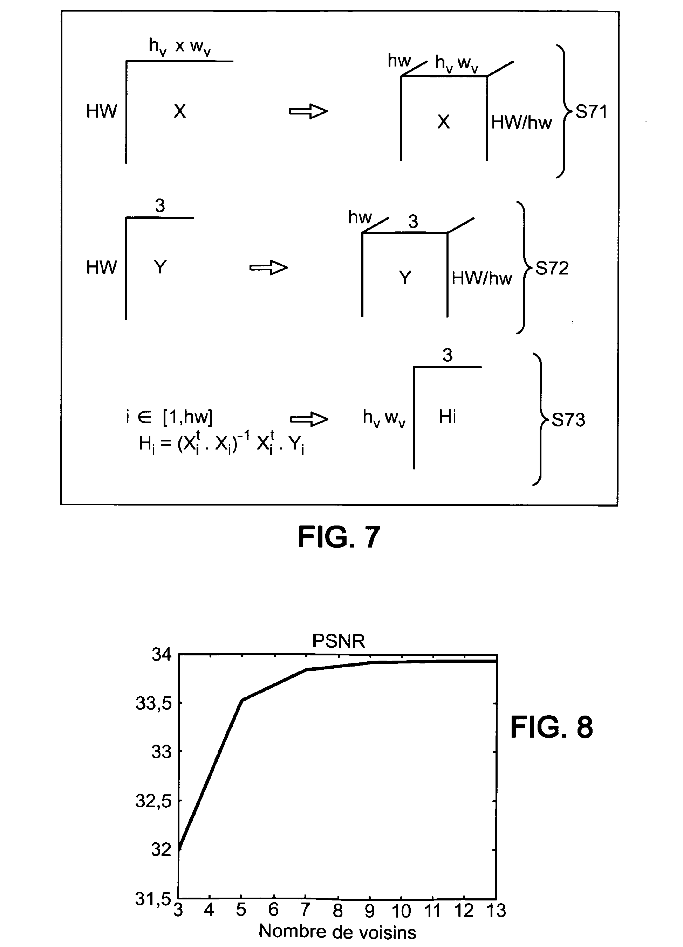

On calcule ensuite les filtres $\mathbf{H}$ comme illustré sur la figure 7, pour chacune des positions différentes du « morceau de capteur » pour reconstruire une image complète à H pixels sur W pixels. Partant de la matrice $\mathbf{X}$ de l'étape 65 de la figure 6, on reprend le voisinage hw exprimé précédemment en référence à l'étape 62 de la figure 6 pour exprimer la matrice $\mathbf{X}$ sous la forme d'une matrice tridimensionnelle à HW/hw lignes, $h_v \times w_v$ colonnes, pour hv matrices bidimensionnelles (étape S71). L'étape suivante S72 revient à appliquer le même traitement à la matrice $\mathbf{Y}$ de la figure 5. On détermine ensuite une matrice de reconstruction $H_i$ pour chaque indice i de voisinage entre 1 et hw selon l'expression :

$$\mathbf{H}_i = (\mathbf{X}_i^{\mathbf{t}}.\mathbf{X}_i)^{-1}.\mathbf{X}_i^{\mathbf{t}}.\mathbf{Y}_i$$

(le signe $\mathbf{X}^{\mathbf{t}}$ désignant la matrice transposée de X).

On obtient ainsi pour chaque pixel $i$ de l'image correspondant à chacun des photosites du capteur un filtre de reconstruction $\mathbf{H}_i$ selon les trois couleurs RGB (étape S73) et pour un voisinage $h_v \times w_v$ de ce pixel $i$. La matrice de reconstruction $\mathbf{H}_i$ est alors optimisée au sens des moindres carrés.

Comme indiqué précédemment, pour réduire les calculs, on peut choisir un voisinage de taille 20x20 que l'on duplique jusqu'à la taille de l'image. Ce procédé ne s'applique toutefois pour des capteurs de taille quelconque que si l'on dispose de suffisamment d'images hyperspectrales pour faire l'apprentissage des filtres de reconstruction. Selon les premiers essais réalisés, huit images suffisent car plusieurs morceaux de chacune d'elles sont utilisés pour l'apprentissage. En effet, ces images ont une taille de 800 pixels sur 800 pixels, et, le voisinage étant de taille de 20 pixels sur 20 pixels, chaque image fournit 1600 échantillons de 20x20.

La taille du voisinage qu'il faut utiliser pour reconstruire au mieux les images a été néanmoins optimisée. L'application du procédé de reconstruction pour plusieurs tailles de voisinage, comme illustré sur la figure 8, montre bien qu'un plus grand nombre de voisins $h_v \times w_v$ (ou « n.m » selon la notation adoptée ci-avant pour la présentation générale de l'invention) améliore la qualité de la reconstruction. Toutefois, la performance de reconstruction parvient à saturation pour une valeur du nombre de voisins autour de 11x11 à 13x13 pixels. Un voisinage de taille raisonnable, à partir de 7x7 pixels, convient déjà pour la reconstruction des images. Ainsi, les dimensions du voisinage n.m peuvent être supérieures ou égales à 7x7.

Pour mesurer l'effet de la base d'apprentissage sur le résultat de la reconstruction, seules 7 des 8 images sont utilisées pour calculer les filtres. Les filtres de reconstruction sont appliqués ensuite sur la huitième image. On choisit alors successivement l'image qui n'est pas utilisée pour le calcul des filtres de reconstruction sur laquelle on applique la reconstruction. Une mesure de la différence entre l'image RGB calculée directement depuis l'image hyperspectrale et celle calculée à partir de l'image hyperspectrale échantillonnée par le capteur, exprimée en rapport signal crête à bruit PSNR (pour « Peak Signal to Noise Ratio ») montre des résultats satisfaisants, ainsi qu'une mesure de la variance de la qualité de la reconstruction suivant l'image qui n'est pas utilisée pour calculer les filtres, comme l'illustre le tableau ci-après.

| voisinage 3x3 | | | | | | | | |
|---|---|---|---|---|---|---|---|---|
| Image | 1 | 2 | 3 | 4 | 5 | 6 | 7 | 8 |
| PSNR | 32.4544 | 22.8787 | 33.1285 | 34.0158 | 29.9351 | 36.8559 | 31.5964 | 32.2003 |
| Ecart type | 0.7651 | 0.4757 | 11.2763 | 0.9833 | 0.7235 | 0.3868 | 1.1460 | 0.7520 |
| Voisinage 7x7 | 36.4257 | | | | | | | |
| PSNR | 39.1815 | 36.4257 | 44.1376 | 34.6090 | 31.0143 | 42.1195 | 36.2391 | 38.6911 |
| Ecart type | 0.4621 | 0.4722 | 1.4683 | 0.9025 | 0.6506 | 0.2440 | 1.5322 | 0.5312 |

L'influence des paramètres $k$, $\mu$ et $\sigma$ sur la qualité de la reconstruction peut être évaluée. A cet effet, dans un premier temps, la variabilité du paramètre $\mu$ est réduite entre 550 et 560 nanomètres, avec $k$ et $\sigma$ variant respectivement entre 0 et 1 et 50 et 200. Le rapport PSNR moyen obtenu est de 26,3 en utilisant cette fois toutes les images pour le calcul du filtre de reconstruction.

Il est alors apparu que, même lorsque les fonctions de sensibilité ne variaient pas en longueur d'onde, il restait possible de reconstruire effectivement des couleurs, vraisemblablement du fait de la variation des largeurs de bande des fonctions de sensibilité.

Le résultat de reconstruction lorsque la variance de la gaussienne des fonctions de sensibilité ne varie pas, $\sigma$ étant défini entre 100 et 101, $k$ et $\sigma$ étant respectivement entre 0.5 et 1 et 450 et 670 nm, donne un rapport PSNR de 28,2.

Pour k entre 0.9 et 1, le rapport PSNR obtenu est 28,7.

En restreignant en même temps $\mu$ entre 550 et 560 nm et $\sigma$ entre 100 et 101, avec toutefois un paramètre $k$ dans une fourchette large entre 0.1 et 1, on obtient la reconstruction la plus défavorable car les fonctions de sensibilités sont toutes presque identiques, mais avec toutefois un gain variant beaucoup. En principe, la variation de gain réduit les capacités de reconstruction des couleurs. Le rapport PSNR obtenu dans cette configuration est de 25,6 (les couleurs apparaissant néanmoins étant alors fades par rapport aux autres choix de paramètres).

Ainsi, dans le procédé au sens de l'invention, la couleur est reconstruite grâce à la variabilité naturelle qui existe entre les photosites. Le capteur dépourvu de matrice de filtres couleurs physiques se comporte comme un capteur dont les fonctions de sensibilité seraient aléatoires et réparties sur le capteur de manière aléatoire. Le procédé de reconstruction des images au sens de l'invention utilise à cet effet :

- une calibration préalable du capteur pour estimer les fonctions de sensibilité en chacun des photosites,
- une estimation des filtres de reconstruction à l'aide d'une base de données d'images multispectrales qui simule l'acquisition d'une image pour le capteur.

Les essais réalisés montrent que ce type de traitement des signaux du capteur peut avoir des qualités de reconstruction des couleurs satisfaisantes.

Par ailleurs, des systèmes d'acquisition d'image en cours de développement, basés par exemple sur les nanotubes de carbone, ne proposent pas de définir une sensibilité spectrale pour chacun des photosites. En effet, ces systèmes sont basés sur un "dopage" des nanotubes par des particules organiques, qu'il est difficile de contrôler finement. Dans ce cas, ces capteurs se comporteront comme une matrice aléatoire de photosites à sensibilités spectrales aléatoires, qu'il sera alors avantageux de traiter selon le procédé de l'invention.

Sur la figure 9, on a résumé finalement les principales étapes d'un exemple de procédé d'étalonnage spectral du capteur, d'une part, et d'acquisition d'images couleurs ensuite par le capteur ainsi étalonné, d'autre part.

Pour l'étalonnage spectral, on considère un capteur d'images en couleurs de HxW pixels, le capteur à étalonner comportant alors HxW photosites.

La première étape a) référencée S91 sur la figure 9 consiste, pour chaque photosite du capteur, de rangée i et de colonne j, à obtenir une fonction spectrale de calibration $f_{i,j}(\lambda)$ donnant une intensité de signal issu du photosite i,j en fonction de la longueur d'onde d'éclairement du photosite. Cette étape peut être effectuée par mesure à l'aide d'un dispositif tel que représenté sur la figure 4 à titre d'exemple.

Une étape suivante b) référencée S92 consiste, à partir d'au moins une image standard (de référence, par exemple d'une base de données) de dimensions HxW et de niveaux d'intensité de lumière connus en chaque pixel pour au moins K couleurs, à construire un premier système matriciel **X** comportant :

- pour chaque ligne, n.m éléments de matrice correspondant respectivement à des intensités de pixels du voisinage d'un pixel central de l'image standard, ces intensités étant modulées chacune par une fonction de calibration $f_{i,j}(\lambda)$ correspondante pour la rangée i et la colonne j d'un pixel de l'image standard,
- et ce, sur W.H lignes.

Ici, on comprendra que la modulation précitée peut correspondre au produit scalaire de matrices particulier « ⊗ », suivi de la somme sur toutes les longueurs d'onde pour parvenir finalement à une matrice bidimensionnelle **X**, comme décrit ci-avant à titre d'exemple en référence à la figure 6, le voisinage précité $h_v \times w_v$ étant renommé ici plus simplement « n.m ».

Ensuite, pour la même image standard, on construit à une étape c) référencée S93 sur la figure 9 un deuxième système matriciel **Y** comportant :

- en chaque ligne, les K niveaux réels d'intensité de signal pour lesdites K couleurs, pour chaque pixel de l'image standard,
- sur W.H lignes.

Cette étape c) correspond, dans un exemple de réalisation, à la construction de la matrice **Y** obtenue par le produit **Y=IA** de la figure 5.

Il est rappelé qu'une réalisation possible de cette étape consiste à déterminer la matrice **A** selon l'étape a) précitée, et en particulier :

- pour chaque photosite, on obtient une valeur d'intensité de signal issu du photosite pour **P** longueurs d'onde successives dans un domaine spectral choisi, un jeu de **P** intensités de signal obtenues formant la fonction spectrale de calibration $f_{i,j}(\lambda)$,
- et le deuxième système matriciel **Y** est réduit avantageusement de sorte que pour une image courante à K couleurs, en moyennant environ P/K colonnes ensemble, on obtient ainsi K colonnes formant le deuxième système matriciel **Y** et correspondant chacune à une couleur.

A l'étape d) référencée S94 sur la figure 9, on établit le système matriciel d'étalonnage **H**, de passage entre le premier système matriciel **X** et le deuxième système matriciel **Y**, tel que **H.X = Y**, par exemple selon la mise en oeuvre décrite ci-avant en référence à la figure 7.

Le système matriciel d'étalonnage **H** représente alors la « fonction » de transfert spatio-chromatique précitée.

Ainsi, à partir d'un premier système matriciel courant **X'** construit par application de l'étape b) à une image courante acquise par le capteur, on peut obtenir une répartition réelle de niveaux d'intensité de couleurs selon un deuxième système matriciel courant **Y'** pour chaque pixel de cette image courante, et tel que **H.X' = Y'**.

En référence à nouveau à la figure 9, une fois le capteur étalonné par l'obtention du système matriciel **H**, le procédé d'acquisition d'images par le capteur peut comporter une compensation de diversité des sensibilités spectrales des photosites du capteur comprenant les étapes suivantes.

Dans une première étape a') référencée S95 sur la figure 9, à partir d'au moins une image courante acquise par le capteur et de dimensions WxH, on construit un premier système matriciel courant **X'** comportant :

- pour chaque ligne, n.m éléments de matrice correspondant respectivement à des intensités de pixels du voisinage d'un pixel central de l'image courante,
- sur WxH lignes.

On a représenté l'aspect de cette matrice **X'** sur la figure 9a.

Dans une étape suivante b'), on applique le système matriciel d'étalonnage **H** au premier système matriciel **X'** pour obtenir à l'étape S96 un deuxième système matriciel **Y',** tel que **H.X' = Y'**, le deuxième système matriciel **Y'** comportant :

- en chaque rangée, une répartition réelle de K niveaux d'intensité de couleurs pour chaque pixel de l'image courante,
- sur WxH lignes, correspondant chacune à l'un des WxH pixels de l'image courante.

On a représenté l'aspect de cette matrice **Y'** sur la figure 9b.

Les termes « systèmes matriciels » sont utilisés ici car les premier et deuxième systèmes matriciels précités (**X** et **Y** ou **X'** et **Y'**) peuvent être tridimensionnels. Par exemple pour les systèmes **X** et **Y** utilisés pour le procédé de calibration (c'est-à-dire d'étalonnage du capteur), une troisième dimension peut être propre à un indice d'image standard parmi une pluralité d'images standards d'une base de données, comme décrit ci-avant (avec par exemple 8 images d'une base de données). On peut alors établir une première matrice **X** et une deuxième matrice **Y** moyennées sur l'ensemble des images de la base de données.

Comme on l'a vu en référence à la figure 8, il est préférable que le nombre de voisins de chaque pixel considéré n.m soit supérieur à une valeur seuil, et, en particulier, préférentiellement supérieur ou égal au nombre de couleurs K pour le passage de la matrice **X** (ou **X'**) à la matrice **Y** (ou **Y'**).

On rappelle que pour chaque photosite, on peut obtenir initialement une valeur d'intensité de signal issu du photosite pour P longueurs d'onde successives dans un domaine spectral choisi (par exemple le visible entre 400 et 700 nm, mais aussi possiblement dans l'infrarouge pour de l'imagerie infrarouge). Un jeu de P intensités de signal obtenues forme alors la fonction spectrale précitée de calibration $f_{i,j}(\lambda)$. Ainsi, comme décrit ci-avant en référence à l'exemple de réalisation de la figure 5, le deuxième système matriciel **Y** est réduit pour une image courante à K couleurs, en « moyennant » environ P/K colonnes ensemble (comme illustré pour la construction de la matrice **A** à l'étape S52) pour obtenir K colonnes formant le deuxième système matriciel **Y** et correspondant chacune à une couleur, avantageusement.

En référence maintenant à la figure 10, un système au sens de l'invention comporte le capteur CAP avec ses photosites desquels une image numérique Im est acquise. Le module MOD associé au capteur peut comporter par exemple un sous-module de détermination de luminance LUM dans l'image Im et un sous-module de détermination de chrominance CHR (par les fonctions respectives $H_L$ et $H_C$). Le module peut comporter en outre un sous-module d'adaptation locale de luminance ADA L et un sous-module d'amplification et de dé-bruitage couleurs ADC. Le module MOD comporte en particulier un sous-module de reconstruction couleur par exemple dans le système à 3 couleurs RGB. Le module MOD peut comporter typiquement dans une implémentation matérielle un processeur, une mémoire de travail pour le stockage non durable des données calculées et une mémoire durable pour le stockage d'instructions de programme informatique au sens de l'invention, notamment pour la mise en oeuvre du procédé de traitement d'images acquises.

Bien entendu, la présente invention ne se limite pas à la forme de réalisation décrite ci-avant à titre d'exemple ; elle s'étend à d'autres variantes.

Ainsi, on a décrit ci-avant des voisinages restreints h.w ou n.m (pour $h_v.w_v$) et de dimensions inférieures à celles du capteur ou de l'image dans son ensemble, cette démarche permettant de limiter la complexité des calculs, si notamment un « morceau de capteur » comporte bien les caractéristiques d'aléa du capteur entier, ou encore respectivement si l'image est suffisamment riche en contraste spectral localement. Toutefois, en variante, ces « voisinages » peuvent correspondre respectivement au capteur entier ou à l'image entière.

Par ailleurs, on a décrit ci-avant en référence à la figure 5 une transformation matricielle sur 3 couleurs RGB, avec en particulier la construction d'une matrice de couleurs **A** contenant des 0 ou des 1 pour les trois couleurs rouge, vert, bleu (avec K=3 sur la figure 9b). D'une part, dans une première variante, il est possible de prévoir d'autres coefficients pour cette matrice **A** (par exemple des valeurs intermédiaires, telles que 0,5 pour les longueurs d'onde entre deux couleurs parmi les trois couleurs rouge, vert, bleu). Il est possible aussi de choisir plus de trois bandes spectrales pour définir plus de 3 couleurs, par exemple une bande pour le violet indigo, une bande pour le bleu, une bande pour le vert, une bande pour le jaune, une bande pour le rouge, ou autres. D'autre part, dans une autre variante consistant à prévoir un système de couleurs sans continuité spectrale comme le cyan, magenta, jaune, noir (avec K=4 sur la figure 9b), il est possible de définir plusieurs bandes spectrales disjointes à coefficients non nuls pour construire la matrice **A** (par exemple pour les couleurs autres que le noir), et éventuellement des bandes spectrales toutes à coefficients nuls ou inférieurs à une valeur seuil (par exemple pour la définition du noir).

On a décrit ci-avant une mesure réelle des fonctions spectrales des photosites des capteurs. On pourrait en variante définir un « morceau de capteur » standard, définissant un motif aléatoire, typique des conditions de construction d'une série donnée de capteur. Il suffit alors d'obtenir ces données d'un constructeur pour mettre en oeuvre le procédé au sens de l'invention.

## Revendications

1. Procédé d'étalonnage spectral d'un capteur d'images en couleurs de HxW pixels et comportant HxW photosites, **caractérisé en ce qu'**il comporte les étapes :

   a) pour chaque photosite du capteur, de rangée i et de colonne j, obtenir (S91) une fonction spectrale de calibration $f_{i,j}(\lambda)$ donnant une intensité de signal issu du photosite i,j en fonction de la longueur d'onde d'éclairement du photosite,
   b) à partir d'au moins une image standard de dimensions HxW et de niveaux d'intensité de lumière connus en chaque pixel pour au moins K couleurs, construire (S92) un premier système matriciel **X** comportant :

   - pour chaque ligne, n.m éléments de matrice correspondant respectivement à des intensités de pixels du voisinage d'un pixel central de l'image standard, lesdites intensités étant modulées chacune par une fonction de calibration $f_{i,j}(\lambda)$ correspondante pour la rangée i et la colonne j d'un pixel de l'image standard,
   - sur W.H lignes,

   c) pour ladite image standard, construire (S93) un deuxième système matriciel **Y** comportant :

   - en chaque ligne, les K niveaux réels d'intensité de signal pour lesdites K couleurs, pour chaque pixel de l'image standard,
   - sur W.H lignes,

   d) et établir (S94) un système matriciel d'étalonnage **H**, de passage entre le premier système matriciel **X** et le deuxième système matriciel **Y**, tel que **H.X = Y**,
   le système matriciel d'étalonnage **H** représentant ladite fonction de transfert spatio-chromatique,
   en vue d'obtenir, à partir d'un premier système matriciel courant **X'** construit par application de l'étape b) à une image courante acquise par le capteur, une répartition réelle de niveaux d'intensité de couleurs selon un deuxième système matriciel courant **Y'** pour chaque pixel de cette image courante, et tel que **H.X' = Y'.**

2. Procédé selon la revendication 1, **caractérisé en ce que** les premier et deuxième systèmes matriciels comportent une troisième dimension propre à un indice d'image standard parmi une pluralité d'images standards d'une base de données pour établir une première matrice **X** et une deuxième matrice **Y** moyennées sur l'ensemble des images de la base de données.

3. Procédé selon l'une des revendications précédentes, **caractérisé en ce que** le nombre de pixels du voisinage d'un pixel central à l'étape b) est supérieur ou égal au nombre de couleurs K.

4. Procédé selon l'une des revendications précédentes, **caractérisé en ce que** à l'étape a), pour chaque photosite, on obtient une valeur d'intensité de signal issu du photosite pour P longueurs d'onde successives dans un domaine spectral choisi, un jeu de P intensités de signal obtenues formant la fonction spectrale de calibration $f_{i,j}(\lambda)$,
   et **en ce que** le deuxième système matriciel **Y** est réduit pour une image courante à K couleurs, en moyennant environ P/K colonnes ensemble pour obtenir K colonnes formant le deuxième système matriciel **Y** et correspondant chacune à une couleur.

**5.** Procédé selon l'une des revendications précédentes, **caractérisé en ce que** les K couleurs sont le rouge, le vert, le bleu, avec K=3.

**6.** Procédé selon l'une des revendications précédentes, **caractérisé en ce que** les K couleurs sont le noir, le cyan, le jaune et le magenta, avec K=4.

**7.** Procédé selon l'une des revendications précédentes, **caractérisé en ce que** les dimensions du voisinage n.m sont supérieures ou égales à 7x7.

**8.** Procédé selon l'une des revendications précédentes, **caractérisé en ce que** la modulation par la fonction de calibration $f_{i,j}(\lambda)$ à l'étape b) revient à calculer, pour chaque élément de matrice $X_{i,j}$ du premier système matriciel **X**, une expression du type:

$$X_{i,j} = \sum_{\lambda=1}^{U} R(\lambda) I_{i,j}(\lambda),$$

où:

- $I_{i,j}(\lambda)$ est une mesure d'intensité d'un signal issu du photosite de rangée i et de colonne j, à la longueur d'onde $\lambda$,
- $R(\lambda)$ est une fonction de sensibilité spectrale,
- $U$ est un nombre de longueurs d'onde choisies dans le visible avec un pas prédéterminé.

**9.** Procédé selon la revendication 8, **caractérisé en ce que** la fonction de sensibilité spectrale s'exprime par une gaussienne du type :

$$R(\lambda) = k \exp\left[-\left(\frac{\lambda-\mu}{\sigma}\right)^2\right]$$

**10.** Procédé selon l'une des revendications 8 et 9, **caractérisé en ce que** le pas prédéterminé est de l'ordre de $p$=10 nm pour un nombre total $U$ de longueurs d'onde de l'ordre d'une trentaine.

**11.** Programme informatique, **caractérisé en ce qu'**il comporte des instructions pour la mise en oeuvre du procédé selon l'une des revendications précédentes, lorsqu'il est exécuté par un processeur.

**12.** Procédé d'acquisition d'images couleurs par un capteur comprenant une pluralité de photosites comportant des sensibilités spectrales susceptibles d'être différentes entre photosites,
**caractérisé en ce qu'**il met en oeuvre des moyens de traitement numérique de signaux issus des photosites, ledit traitement numérique comportant l'application auxdits signaux (S95) d'une fonction de transfert spatio-chromatique (S94) tenant compte d'une diversité de sensibilités spectrales des photosites,
**en ce que** ladite fonction de transfert est obtenue par la mise en oeuvre du procédé d'étalonnage selon l'une des revendications précédentes.

**13.** Procédé d'acquisition selon la revendication 12, ledit capteur étant étalonné par la mise en oeuvre du procédé selon l'une des revendications 1 à 10 et le système matriciel d'étalonnage **H** représentant ladite fonction de transfert spatio-chromatique, **caractérisé en ce que** le procédé d'acquisition comporte une compensation de diversité des sensibilités spectrales des photosites comprenant les étapes :

a') à partir d'au moins une image courante acquise par le capteur et de dimensions WxH, construire (S95) un premier système matriciel courant **X'** comportant :

- pour chaque ligne, n.m éléments de matrice correspondant respectivement à des intensités de pixels du voisinage d'un pixel central de l'image courante,
- sur WxH lignes,

b') appliquer le système matriciel d'étalonnage **H** au premier système matriciel **X'** pour obtenir (S96) un deuxième système matriciel **Y'**, tel que **H.X' = Y',** le deuxième système matriciel **Y'** comportant :

- en chaque rangée, une répartition réelle de niveaux d'intensité de couleurs pour chaque pixel de l'image courante,
- sur WxH lignes, correspondant chacune à l'un des WxH pixels de l'image courante.

**14.** Programme informatique, **caractérisé en ce qu'**il comporte des instructions pour la mise en oeuvre du procédé selon l'une des revendications 12 et 13, lorsqu'il est exécuté par un processeur.

**15.** Module de traitement d'images numériques issues d'un capteur d'images en couleurs comportant une pluralité de photosites, **caractérisé en ce qu'**il comporte des moyens pour la mise en oeuvre du procédé selon l'une des revendications 1 et 12.

**16.** Système comportant un module selon la revendication 15, et un capteur relié audit module, **caractérisé en ce que** ledit capteur est dépourvu d'une matrice physique de filtres de couleurs.

**Patentansprüche**

**1.** Verfahren zum Spektralabgleich eines Farbbildsensors von HxW Pixeln und umfassend HxW Photosites, **dadurch gekennzeichnet, dass** es die folgenden Schritte umfasst:

a) für jede Photosite des Sensors der Reihe i und der Spalte j den Erhalt (S91) einer Kalibrierspektralfunktion $f_{i,j}(\lambda)$, die eine Stärke des Signals, das aus der Photosite i, j kommt, in Abhängigkeit von der Beleuchtungswellenlänge der Photosite angibt,
b) auf Basis mindestens eines Standardbildes der Dimensionen HxW und von bekannten Lichtstärkeniveaus an jedem Pixel für mindestens K Farben die Konstruktion (S92) eines ersten Matrixsystems X, umfassend:

- für jede Zeile n.m Matrixelemente entsprechend jeweils Pixelstärken in der Nähe eines zentralen Pixels des Standardbildes, wobei die Stärken jeweils durch eine entsprechende Kalibrierfunktion $f_{i,j}(\lambda)$ für die Reihe i und die Spalte j eines Pixels des Standardbildes moduliert werden,
- auf W.H Zeilen,

c) für das Standardbild Konstruktion (S93) eines zweiten Matrixsystems Y, umfassend:

- auf jeder Zeile die K tatsächlichen Signalstärkeniveaus für die K Farben für jedes Pixel des Standardbildes,
- auf W.H Zeilen,

d) und Herstellung (S94) eines Abgleichmatrixsystems H für den Übergang zwischen dem ersten Matrixsystem X und dem zweiten Matrixsystem Y, so dass H.X=Y, wobei das Abgleichmatrixsystem H die spatiochromatische Übertragungsfunktion darstellt, um aus einem ersten laufenden Matrixsystem X', das durch Anwendung des Schritts b) für ein vom Sensor erfasstes laufendes Bild konstruiert wird, eine tatsächliche Verteilung von Farbstärkeniveaus entlang eines zweiten laufenden Matrixsystems Y' für jedes Pixel dieses laufenden Bildes zu erhalten, so dass H.X'=Y'.

**2.** Verfahren nach Anspruch 1, **dadurch gekennzeichnet, dass** die ersten und zweiten Matrixsysteme eine dritte Dimension umfassen, die für einen Standardbildindex unter einer Vielzahl von Standardbildindizes einer Datenbasis geeignet ist, um eine erste Matrix X und eine zweite Matrix Y zu erstellen, die auf der Gesamtheit der Bilder der Datenbasis gemittelt sind.

**3.** Verfahren nach einem der vorhergehenden Ansprüche, **dadurch gekennzeichnet, dass** die Anzahl von Pixeln in der Nähe eines zentralen Pixels in Schritt b) größer oder gleich der Anzahl von Farben K ist.

**4.** Verfahren nach einem der vorhergehenden Ansprüche, **dadurch gekennzeichnet, dass** in Schritt a) für jede Photosite ein Stärkewert eines Signals, das von der Photosite stammt, für P aufeinanderfolgende Wellenlängen in einem ausgewählten Spektralbereich erhalten wird, wobei ein Satz von P erhaltenen Signalstärken die Kalibrierspektralfunktion $f_{i,j}(\lambda)$ bildet, und dass das zweite Matrixsystem Y für ein laufendes Bild auf K Farben reduziert wird, wobei ungefähr P/K Spalten gemeinsam gemittelt werden, um K Spalten zu erhalten, die das zweite Matrixsystem Y bilden und jeweils einer Farbe entsprechen.

**5.** Verfahren nach einem der vorhergehenden Ansprüche, **dadurch gekennzeichnet, dass** die K Farben rot, grün, blau sind, wobei K=3.

**6.** Verfahren nach einem der vorhergehenden Ansprüche, **dadurch gekennzeichnet, dass** die K Farben schwarz, zyan, gelb und magenta sind, wobei K=4.

**7.** Verfahren nach einem der vorhergehenden Ansprüche, **dadurch gekennzeichnet, dass** die Dimensionen der Nähe n.m größer oder gleich 7x7 sind.

**8.** Verfahren nach einem der vorhergehenden Ansprüche, **dadurch gekennzeichnet, dass** die Modulation für die Kalibrierfunktion $f_{i,j}(\lambda)$ in Schritt b) bedeutet, für jedes Matrixelement $X_{i,j}$ des ersten Matrixsystems X einen Ausdruck folgenden Typs zu berechnen:

$$X_{i,j} = \sum_{\lambda=1}^{U} R(\lambda) I_{i,j}(\lambda),$$

wobei

- $I_{i,j}(\lambda)$ ein Maß für die Stärke eines Signals, das aus der Photosite der Reihe i und der Spalte j stammt, bei der Wellenlänge $\lambda$ ist,
- $R(\lambda)$ eine Funktion der Spektralsensibilität ist,
- U eine Anzahl von Längenwellen ist, die im sichtbaren Bereich mit einem vorbestimmten Abstand ausgewählt werden.

**9.** Verfahren nach Anspruch 8, **dadurch gekennzeichnet, dass** die Spektralsensibilitätsfunktion durch eine Gauss'sche Funktion folgenden Typs ausgedrückt wird:

$$R(\lambda) = k \exp\left[-\left(\frac{\lambda-\mu}{\sigma}\right)^2\right]$$

**10.** Verfahren nach einem der Ansprüche 8 und 9, **dadurch gekennzeichnet, dass** der vorbestimmte Abstand ungefähr p=10 nm für eine Gesamtanzahl U von Wellenlängen von ungefähr dreißig beträgt.

**11.** Informatikprogramm, **dadurch gekennzeichnet, dass** es Befehle für den Einsatz des Verfahrens nach einem der vorhergehenden Ansprüche umfasst, wenn es von einem Prozessor ausgeführt wird.

**12.** Verfahren zur Erfassung von Farbbildern durch einen Sensor, umfassend eine Vielzahl von Photosites, umfassend Spektralsensibilitäten, die geeignet sind, zwischen Photosites unterschiedlich zu sein,
**dadurch gekennzeichnet, dass** es Mittel zur digitalen Bearbeitung von Signalen, die von den Photosites stammen, einsetzt, wobei die digitale Bearbeitung die Anwendung einer spatiochromatischen Übertragungsfunktion (S94) an die Signale (S95) umfasst, die eine Diversität von Spektralsensibilitäten der Photosites berücksichtigt,
dass die Übertragungsfunktion durch den Einsatz des Abgleichverfahrens nach einem der vorhergehenden Ansprüche erhalten wird.

**13.** Erfassungsverfahren nach Anspruch 12, wobei der Fühler durch den Einsatz des Verfahrens nach einem der Ansprüche 1 bis 10 abgeglichen wird und das Abgleichmatrixsystem H die spatiochromatische Übertragungsfunktion darstellt, **dadurch gekennzeichnet, dass** das Erfassungsverfahren eine Diversitätskompensation der Spektralsensibilitäten der Photosites aufweist, umfassend die folgenden Schritte:

a') aus mindestens einem laufenden Bild, das von dem Sensor erfasst wird und Dimensionen WxH hat, Konstruktion (S95) eines ersten laufenden Matrixsystems X', umfassend:

- für jede Zeile n.m Matrixelemente entsprechend jeweils Pixelstärken in der Nähe eines zentralen Pixels des laufenden Bildes,
- auf WxH Zeilen,

b') Anwenden des Abgleichmatrixsystems H am ersten Matrixsystem X', um ein zweites Matrixsystem Y' zu erhalten (S96), so dass H.X'=Y', wobei das zweite Matrixsystem Y' umfasst:

- in jeder Zeile eine tatsächliche Verteilung von Farbstärkeniveaus für jedes Pixel des laufenden Bildes,
- auf WxH Zeilen jeweils entsprechend einem der WxH Pixel des laufenden Bildes.

**14.** Informatikprogramm, **dadurch gekennzeichnet, dass** es Befehle für den Einsatz des Verfahrens nach einem der Ansprüche 12 und 13 umfasst, wenn es von einem Prozessor ausgeführt wird.

**15.** Modul zur Bearbeitung von digitalen Bildern, die von einem Farbbildsensor stammen, umfassend eine Vielzahl von Photosites, **dadurch gekennzeichnet, dass** es Mittel für den Einsatz des Verfahrens nach einem der Ansprüche 1 und 12 umfasst.

**16.** System, umfassend ein Modul nach Anspruch 15 und einen Sensor, der mit dem Modul verbunden ist, **dadurch gekennzeichnet, dass** der Sensor keine physische Farbfiltermatrix aufweist.

## Claims

**1.** Method for spectral calibration of a color image sensor for images of HxW pixels and comprising HxW photosites, wherein it comprises the steps of:

a) for each sensor photosite of row i and column j, obtaining (S91) a spectral calibration function $f_{i,j}(\lambda)$ giving an intensity for the signal from the photosite i,j as a function of the light wavelength for the photosite,
b) from at least one standard image of dimensions HxW and of known light intensity levels at each pixel for at least K colors,
constructing (S92) a first matrix system **X** comprising:

- for each row, n.m matrix elements respectively corresponding to intensities of pixels in the neighborhood of a central pixel of the standard image, said intensities each being modulated by a corresponding calibration function $f_{i,j}(\lambda)$ for row i and column j of a pixel of the standard image,
- for W.H rows,

c) for said standard image, constructing (S93) a second matrix system **Y** comprising:

- in each row, the K actual signal intensity levels for said K colors, for each pixel of the standard image,
- for W.H rows,

d) and establishing (S94) a calibration matrix system **H** for the transformation between the first matrix system **X** and the second matrix system **Y**, such that **H.X = Y**,
the calibration matrix system **H** representing said spatial-chromatic transfer function,
in order to obtain, from a first current matrix system **X'** constructed by applying step b) to a current image captured by the sensor, an actual distribution of color intensity levels according to a second current matrix system **Y'** for each pixel of this current image, and such that **H.X' = Y'**.

**2.** Method according to claim 1, wherein the first and second matrix systems comprise a third dimension specific to an index for a standard image among a plurality of standard images in a database, in order to establish a first matrix **X** and a second matrix **Y** averaged over the set of images in the database.

**3.** Method according to either of claims 1 or 2, wherein the number of pixels in the neighborhood of a central pixel in step b) is greater than or equal to the number of colors K.

**4.** Method according to any one of the preceding claims, wherein in step a), for each photosite, an intensity value for the signal from the photosite for P successive wavelengths within a chosen spectral range is obtained, a set of P obtained signal intensities forming the spectral calibration function $f_{i,j}(\lambda)$,
and wherein the second matrix system **Y** is reduced for a current image of K colors, by averaging together about P/K columns to obtain K columns forming the second matrix system **Y** and each one corresponding to a color.

5. Method according to any one of the preceding claims, wherein the K colors are red, green, blue, with K=3.

6. Method according to any one of the preceding claims, wherein the K colors are black, cyan, yellow, and magenta, with K=4.

7. Method according to any one of the preceding claims, wherein the dimensions of the neighborhood n.m are greater than or equal to 7x7.

8. Method according to any one of the preceding claims, wherein the modulation by the calibration function $f_{i,j}(\lambda)$ in step b) amounts to calculating, for each matrix element $X_{i,j}$ in the first matrix system **X**, an expression of the type:

$$X_{i,j} = \sum_{\lambda=1}^{U} R(\lambda) I_{i,j}(\lambda),$$

where:

- $I_{i,j}(\lambda)$ is an intensity measurement for a signal from the photosite of row i and column j, at wavelength $\lambda$,
- $R(\lambda)$ is a spectral sensitivity function,
- $U$ is a number of wavelengths chosen within the visible spectral range, at a predetermined interval.

9. Method according to claim 8, wherein the spectral sensitivity function is expressed by a Gaussian of the type:

$$R(\lambda) = k \exp\left[-\left(\frac{\lambda-\mu}{\sigma}\right)^2\right]$$

10. Method according to either of claims 8 or 9, wherein the predetermined interval is about $p$=10 nm, yielding a total number $U$ of about thirty wavelengths.

11. Computer program, comprising instructions for implementing the method according to any of the above claims when it is executed by a processor.

12. Method for the acquisition of color images by a sensor comprising a plurality of photosites having spectral sensitivities likely to differ between photosites,
wherein it makes use of means for digitally processing signals from the photosites, said digital processing comprising the application to said signals (S95) of a spatial-chromatic transfer function (S94) taking into account a diversity in the spectral sensitivities of the photosites,
wherein said transfer function is obtained by making use of the calibration method according to any of the above claims.

13. Acquisition method according to claim 12, said sensor being calibrated using the method according to any of claims 1 to 10 and the calibration matrix system **H** representing said spatial-chromatic transfer function, wherein the acquisition method includes a compensation for diversity in the spectral sensitivities of photosites, comprising the steps of:

a') from at least one current image captured by the sensor and of dimensions WxH, constructing (S95) a first current matrix system **X'** comprising:

- for each row, n.m matrix elements respectively corresponding to the intensities of pixels within the neighborhood of a central pixel of the current image,
- for WxH rows,

b') applying the calibration matrix system **H** to the first matrix system **X'** in order to obtain (S96) a second matrix system Y', such that **H.X' = Y'**, the second matrix system **Y'** comprising:

- in each row, an actual distribution of color intensity levels for each pixel of the current image,
- for WxH rows, each corresponding to one of the WxH pixels of the current image.

14. Computer program, comprising instructions for implementing the method according to either of claims 12 or 13, when it is executed by a processor.

15. Module for processing digital images from a color image sensor comprising a plurality of photosites, wherein it comprises means for implementing the method according to either of claims 1 or 12.

16. System comprising a module according to claim 15, and a sensor connected to said module, wherein said sensor is without a physical color filter array.

**FIG. 1**

**FIG. 2**

FIG. 3

FIG. 5

FIG. 4

# FIG. 6

$$h_v \times w_v$$

HW     X $\Rightarrow$ hw $h_v\,w_v$   X   HW/hw $\Big\}$ S71

3

HW     Y $\Rightarrow$ hw   3   Y   HW/hw $\Big\}$ S72

$i \in [1,\text{hw}]$ $\Rightarrow$ $h_v\,w_v$   3   Hi $\Big\}$ S73
$H_i = (X_i^t \cdot X_i)^{-1} X_i^t \cdot Y_i$

## FIG. 7

PSNR

Nombre de voisins

## FIG. 8

$$f_{i,j} (\lambda)$$ — S91

$$X [(n.m , W.H) \otimes f_{i,j} (\lambda)]$$ — S92

S93

S94 — $H / Y = HX$ ← $Y (W.H , K)$

S95 — $X'$     $Y'$ — S96

**FIG. 9**

n.m

H.W | X'

**FIG. 9a**

K

H.W | Y'

**FIG. 9b**

**FIG. 10**

CAP

MOD

Im → ADA L

HL → LUM

CHR → ADC → REC C

HC

R G B